# EUROPÄISCHE PATENTSCHRIFT

(11) **EP 4 026 722 B1**
(45) Veröffentlichungstag und Bekanntmachung des Hinweises auf die Patenterteilung: **08.05.2024**
(21) Anmeldenummer: 21213851.5
(22) Anmeldetag: 10.12.2021
(51) Int. Cl.: B60L 50/50, B60L 3/12, B60L 15/20, B60L 58/10, B60L 58/12, B60W 50/00, B60W 40/13

(54) **VERFAHREN UND REICHWEITENERMITTLUNGSVORRICHTUNG ZUR ERMITTLUNG EINER ZU ERWARTENDEN REICHWEITE EINES FAHRZEUGS IM ANHÄNGERBETRIEB**
METHOD AND RANGE DETERMINATION DEVICE FOR DETERMINING THE EXPECTED RANGE OF A VEHICLE IN TRAILER OPERATION
PROCÉDÉ ET DISPOSITIF DE DÉTERMINATION DE L'AUTONOMIE DESTINÉ À LA DÉTERMINATION DE L'AUTONOMIE ATTENDUE D'UN VÉHICULE LORS DU FONCTIONNEMENT DE LA REMORQUE

(30) Priorität: 11.01.2021 DE 102021200183
(43) Veröffentlichungstag der Anmeldung: 13.07.2022
(73) Patentinhaber: VOLKSWAGEN AG, 38440 Wolfsburg (DE)
(72) Erfinder: Mossau, Daniel, 38448 Wolfsburg (DE)

(56) Entgegenhaltungen:
- DE-A1-102010 063 436
- DE-A1-102015 204 959
- US-A1- 2017 297 563
- US-A1- 2020 226 850

## Beschreibung

Die vorliegende Erfindung bezieht sich auf ein Verfahren zur Ermittlung einer zu erwartenden Reichweite eines Fahrzeugs und eine Reichweitenermittlungsvorrichtung für ein Fahrzeug im Anhängerbetrieb. Insbesondere handelt es sich um ein Verfahren zur Reichweitenberechnung im Anhängerbetrieb.

Eine Reichweitenberechnung ist insbesondere bei Elektrofahrzeugen essentiell wichtig bei der Planung der Fahrt. Da durch einen Anhänger der Verbrauch stark beeinflusst wird, ist es bei beispielsweise einer Urlaubsfahr nur schwer möglich, die Tank- bzw. Ladestopps zu planen.

Ein Anhänger beeinflusst den Verbrauch eines Fahrzeugs erheblich. Durch größeres Gewicht und größeren Luftwiderstand erhöht sich der Verbrauch und damit verringert sich die Reichweite des Fahrzeugs.

Aus dem Stand der Technik sind Reichweitenberechnungen aufgrund des durchschnittlichen Verbrauchs der aktuellen Fahrt bzw. der Historie bekannt.

Das Ankuppeln eines Anhängers ist ein spontanes Ereignis und kann daher nicht vorausgesehen werden. Die Reichweitenberechnung berücksichtigt dies erst im Laufe der Fahrt und korrigiert die Restreichweite stark nach unten. Dadurch muss der Tank- / Ladestopp während der Fahrt "spontan" angepasst werden. Bei Verbrennerfahrzeugen ist dies (zumeist) problemlos möglich, während eine solche "spontane Anpassung" bei Elektrofahrzeugen sehr problematisch ist.

Gerade bei Elektrofahrzeugen ist es notwendig, den zu erwartenden Verbrauch zu kennen, um gegebenenfalls Ladestopps einzuplanen. Durch das derzeit noch nicht lückenlos sehr gut ausgebaute Ladenetzwerk ist es nicht möglich, an beliebiger Stelle zu laden.

Es gibt verschiedene Planer sowohl im Internet sowie als App oder auch im Fahrzeugnavigationssystem integriert, mit denen Routen und die passenden Ladepunkte geplant werden können. Ein Anhänger wird hier meistens nicht berücksichtigt. Eine Möglichkeit ist, bei bekanntem Verbrauch mit Anhänger, diesen Verbrauch anzugeben. Dies ist den meisten Fahrern aber nicht möglich, da sie keine oder nur wenig Erfahrung mit dem Anhängerverbrauch haben.

Aus der DE 102018005566 A1 ist ein Verfahren für das Bestimmen einer Reichweite eines elektrisch antreibbaren und eine Batterie aufweisenden Kraftwagen bekannt, in welchem ein zusätzlicher Energiebedarf eines angehängten Anhängers durch Abgleich eines Fahrbetriebszustands des Kraftwagens mit und ohne Anhänger ermittelt wird.

Aus der US 9,834,111 B2 ist eine Reichweitenvorhersage für Elektrofahrzeuge bekannt, die den Fahrstil, Fahrgeschwindigkeit, Fahrzyklus und Energieaufwand der Energie verbrauchenden Einrichtungen berücksichtigen soll. Die Reichweitenvorhersage basiert dabei auf einem Energiemodell, welches für Fahrzeugen mit angehängten Anhängern gegenüber einem Standard-Energiemodell für ein Fahrzeug ohne Anhänger modifiziert ist. Wird ein angehängter Anhänger erkannt, wird die Reichweitenvorhersage des Energiemodells für Fahrzeuge mit angehängtem Anhänger angezeigt.

In der US 10,336,213 B2 ist ein Verfahren zum Betreiben eines elektrisch betriebenen Fahrzeugs mit einer elektrischen Energiespeichereinrichtung beschrieben. In dieser wird ein Zielladezustand sowie eine Strategie für den Betrieb des Fahrzeugs auf Grundlage einer vorgegebenen Route berechnet. Dabei kann vor der Fahrt eine Gesamtmasse des Fahrzeugs optional mit einem daran angehängten Anhänger und/oder ein Luftwiderstandskoeffizient des Fahrzeugs berücksichtigt werden.

Aus der US 2017/297563 A1 ist ein Verfahren zur Klassifizierung von Typ und Gewicht eines von einem Fahrzeug gezogenen Anhängers bekannt. Die Klassifizierung basiert auf einem Vergleich zwischen einer Echtzeit-Straßenneigung, die vom Fahrzeugsystem ermittelt wird, und einer erwarteten Straßenneigung, die aus einer Off-Board- oder On-Board-Karte ermittelt wird. Der Fahrzeugbetrieb kann auf der Grundlage der Klassifizierung des angehängten Anhängers angepasst werden.

Aus der DE 10 2015 204 959A1 ist ein Verfahren zur Ermittlung des Durchschnittsverbrauchs und der verbleibenden Reichweite basierend auf einer zurückgelegten Distanz und dem aktuellen Energieinhalt eines Energiespeichers bekannt, wobei sich das Kraftfahrzeug in einem von mehreren Fahrbetriebszuständen befindet. Die Fahrbetriebszustände umfassen dabei ein Fahren ohne oder mit einem Anhänger oder mit einem anderen Anhänger.

Aus der US 2020/226850 ist ein System zur Abschätzung der Fahrreichweite eines Fahrzeugs bekannt, das eine Last auf dem Fahrzeug berücksichtigt. Weiterhin sind Sensoren vorgesehen, welche Informationen der Fahrzeugumgebung erfassen, die für eine Entfernungsschätzung relevant sind und es wird eine Reichweite des Fahrzeugs mit und ohne Last ermittelt.

Der vorliegenden Erfindung liegt die Aufgabe zugrunde, die aus dem Stand der Technik bekannten Nachteile zu überwinden und ein Verfahren zur Ermittlung einer zu erwartenden Reichweite eines Fahrzeugs im Anhängerbetrieb sowie eine Reichweitenermittlungsvorrichtung für ein Fahrzeug im Anhängerbetrieb bereitzustellen, welche ein sehr hohe Präzision und gleichermaßen eine sehr schnelle Ermittlung einer zu erwartenden Reichweite erlauben.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zur Ermittlung einer zu erwartenden Reichweite eines Fahrzeugs im Anhängerbetrieb weist das Fahrzeug eine Anhängerkupplung zur Kopplung mit einem Anhänger zu einem Gespann auf. Bevorzugt handelt es sich bei dem Fahrzeug um ein Elektrofahrzeug.

Eine Ermittlungseinrichtung (insbesondere des Fahrzeugs) ermittelt (und insbesondere speichert) wenigstens eine Ausdehnungsgröße für einen an das Fahrzeug gekoppelten und/oder zu koppelnden Anhänger (als Anhängerparameter). Dabei ist die Ausdehnungsgröße charakteristisch für eine geometrische Ausdehnung des Anhängers in wenigstens eine (Raum- )Richtung.

Eine Reichweitenermittlungsvorrichtung, insbesondere des Fahrzeugs, ermittelt einen Reichweitenwert, welcher für die zu erwartende Reichweite des Gespanns aus dem Fahrzeug und dem Anhänger charakteristisch ist, auf Grundlage der wenigstens einen Ausdehnungsgröße.

Mit anderen Worten werden die Ausmaße des Anhängers, beispielsweise Breite und/oder Höhe, bestimmt. Diese Ausdehnungsgröße(n) kann bzw. können direkt in die Reichweitenberechnung bzw. Reichweitenermittlung (insbesondere von der Reichweitenermittlungsvorrichtung) einbezogen werden. Dies bietet den Vorteil, dass sich die Reichweitenberechnung bzw. die Reichweitenermittlung sehr schnell dem richtigen Wert annähert. Besonders vorteilhaft ist eine Kundeneingabe hier nicht erforderlich.

Bevorzugt ist die Reichweitenermittlungsvorrichtung dazu geeignet und bestimmt, eine Route und/oder einen Routenabschnitt und/oder wenigstens einen (nächsten) Ladestopp und/oder Tankstopp, insbesondere auf Grundlage der wenigstens einen Ausdehnungsgröße und bevorzugt auf Grundlage mehrerer Ausdehnungsgrößen, zu berechnen und/oder zu ermitteln.

Bei dem Anhänger kann es sich um einen beliebigen an ein Fahrzeug koppelbaren Anhänger und/oder an das Fahrzeug koppelbaren Aufbau handeln. So kann es sich beispielsweise um einen PKW-Anhänger, etwa um einen Einachs- und/oder einen Mehrachs-Anhänger, einen Kofferanhänger, einen Viehanhänger, einen Pferdeanhänger, einen Multifunktionsanhänger oder einen Tandemanhänger handeln. Bevorzugt weist der Anhänger wenigstens eine Achse auf.

Insbesondere kann es sich bei dem Anhänger um einen Wohnwagen handeln. Dabei kann insbesondere der Anhänger das Fahrzeug in seiner Breite und/oder Höhe und/oder Länge übersteigen. Die vorliegende Erfindung ist insbesondere in derartigen Anhängerbetrieben mit derartigen Anhängern vorteilhaft, da hier durch den Anhänger durch eine größere geometrische Ausdehnung in wenigstens eine (Raum-)Richtung wesentlich der Luftwiderstandswert des Gespanns im Vergleich zu einer Fahrt des Fahrzeugs ohne Anhänger beeinflusst und insbesondere erhöht wird, so dass der Energieverbrauch entsprechend deutlich größer sein kann.

Unter einer geometrischen Ausdehnung des Anhängers ist insbesondere eine Breite und/oder eine Höhe und/oder eine Länge des Anhängers zu verstehen. Dabei kann sich die Länge auf die gesamte Länge des Anhängers einschließlich der Länge der Deichsel oder auch eine Länge des Anhängers ohne dessen Deichsel beziehen. Bevorzugt handelt es sich bei der geometrischen Ausdehnung um ein Ausmaß des Anhängers.

Bevorzugt bezieht sich die geometrische Ausdehnung auf den gesamten Anhänger. Denkbar ist aber auch, dass sich die geometrische Ausdehnung auf lediglich einen Teil oder einen Bereich des Anhängers, etwa einen vorderen oder einen hinteren Bereich oder lediglich eine Seite des Anhängers.

Ebenfalls denkbar ist, dass die geometrische Ausdehnung nicht nur eines, sondern mehrerer, etwa zweier Anhänger, ermittelt wird und bei der Ermittlung der zu erwartenden Reichweite berücksichtigt werden. Dies könnte etwa bei einem Gespann aus einem (Zug-)Fahrzeug und zwei oder mehreren Anhängern verwendet werden.

Bevorzugt kann die Ermittlungseinrichtung Teil eines Anhängerrangierassistenten (abgekürzt mit "ARA") sein. So kann die Ermittlungseinrichtung etwa wenigstens eine Ausdehnungsgröße für einen an das Fahrzeug gekoppelten und/oder zu koppelnden Anhänger ermitteln und diese wenigstens eine Ausdehnungsgröße verwenden, um hieraus einen Lenkbefehl, etwa einen Fahrwinkel und/oder einen Lenkradeinschlag zu ermitteln und insbesondere dem Nutzer bzw. dem Fahrer (insbesondere über eine Mensch-Maschinenschnittstelle (HMI)) auszugeben und insbesondere zu visualisieren.

In Hinsicht auf eine bevorzugte Ermittlung wenigstens einer Ausdehnungsgröße wird insbesondere Bezug genommen auf die Offenlegungsschrift DE 10 2015 210 816 A1, deren Inhalt hiermit in diese Anmeldung aufgenommen wird. Darin wird die Bestimmung einer Länge eines Anhängers beschrieben, welcher mit einem Fahrzeug zu einem Gespann koppelbar ist. Bei dem Verfahren wird eine Seitenansicht des Anhängers mit einer Erfassungseinrichtung des Fahrzeugs erfasst und die Länge des Anhängers in Abhängigkeit von der erfassten Seitenansicht bestimmt.

In Hinsicht auf eine bevorzugte alternative oder zusätzliche Ermittlung wenigstens einer Ausdehnungsgröße wird insbesondere Bezug genommen auf die Offenlegungsschrift DE 10 2015 226 695 A1, deren Inhalt hiermit in diese Anmeldung aufgenommen wird. Darin wird ein Verfahren und eine Vorrichtung zur Bestimmung der Überhanglänge eines einachsigen Anhängers sowie ein Anhängerrangierassistenzsystem mit einer solchen Vorrichtung beschrieben.

In Hinsicht auf eine bevorzugte alternative oder zusätzliche Ermittlung wenigstens einer Ausdehnungsgröße wird insbesondere Bezug genommen auf die Offenlegungsschrift DE 10 2016 212 181 A1, deren Inhalt hiermit in diese Anmeldung aufgenommen wird. Darin wird ein Verfahren zur Bestimmung von Längen- und/oder Größenverhältnissen eines Anhängers, insbesondere auch im Rahmen einer Verwendung eines Anhängerrangierassistenten, beschrieben.

Bevorzugt ist die Erfassungseinrichtung Teil der Ermittlungseinrichtung zur Ermittlung der wenigstens einen Ausdehnungsgröße des Anhängers. Bevorzugt wird die Seitenansicht des Anhängers bei der ersten (oder einer der ersten) Kurvenfahrt des Gespanns nach Fahrtantritt von der Ermittlungseinrichtung (über Erfassung durch die Erfassungseinrichtung) ermittelt.

Alternativ oder zusätzlich können insbesondere auch andere aus dem Bereich eines Anhängerrangierassistenten "ARA" bekannten Verfahren zur Bestimmung der Ausmaße des Anhängers verwendet werden.

Bevorzugt wird eine Ermittlung der wenigstens einen Ausdehnungsgröße ausgelöst, indem das Fahrzeug eine Ankopplung eines Anhängers erkennt. Bevorzugt wird das Fahrzeug in einem Betriebszustand betrieben, in welchem eine Steckverbindung an einem Anhängerkopplungselement, insbesondere einem Anhängersteckelement überprüft wird. Wird ein Anhänger an das Fahrzeug angekoppelt, wird bevorzugt über eine Steckerkennung durch das Anstecken des Anhängers an beispielsweise eine elektrische LV-Versorgung ("Low Voltage") erkannt, dass ein Anhänger mitgezogen werden soll.

Bevorzugt wird sodann ein Anhängerbetriebsmodus des Fahrzeugs aktiviert. Bevorzugt erfolgt mit Aktivierung des Anhängerbetriebsmodus des Fahrzeugs eine Auslösung der Ermittlung der wenigstens einen Ausdehnungsgröße. Bevorzugt kann das Fahrzeug eine Einrichtung zur Detektion eines angekoppelten Anhängers aufweisen. Denkbar ist, dass die Einrichtung zur Detektion bereits vor einem Ankuppeln des Anhängers insbesondere manuell von einem Nutzer aktiviert werden kann.

Bei einem bevorzugten Verfahren ermittelt (und/oder speichert) die Reichweitenermittlungsvorrichtung (insbesondere als Anhängerparameter), etwa aus einem Anfahrmoment des Gespanns aus dem Fahrzeug und dem Anhänger, eine Masse (bzw. ein Gewicht) des Anhängers und/oder des Gespanns. Bevorzugt wird der Reichweitenwert unter Berücksichtigung dieser Masse (bzw. dieses Gewichts) ermittelt.

Insbesondere ist beispielsweise auch möglich, dass bereits vor Fahrtantritt oder sogar vor der Kopplung des Anhängers an das (Zug-)Fahrzeug eine zu erwartende Reichweite des Fahrzeugs im Anhängerbetrieb an den gekoppelten oder sogar an den zu koppelnden Anhänger (durch die Reichweitenermittlungsvorrichtung insbesondere unter Berücksichtigung der wenigstens einen Ausdehnungsgröße und des Gewichts des Anhängers) angepasst werden kann.

Insbesondere kann das Gewicht des Anhängers oder des Gespanns aus dem Anfahrmoment bestimmt werden. Diese veränderten Parameter (insbesondere des Gewichts und der Ausmaße des Anhängers) können direkt in die Reichweitenberechnung einbezogen werden, wodurch sich vorteilhaft die Reichweitenberechnung sehr schnell dem richtigen Wert annähert. Eine Kundeneingabe ist hier nicht erforderlich.

Bevorzugt wird bei der Ermittlung der Masse eine angeforderte Energie und/oder Leistung insbesondere beim (nach Aufnahme des Anhängerbetriebs erstmaligen) Anfahren des Fahrzeugs berücksichtigt. Bevorzugt wird (insbesondere zusätzlich) eine (Straßen-)Position des Fahrzeugs (etwa eine Steigung der Fahrbahn) und/oder eine Lage des Fahrzeugs (insbesondere eine Ausrichtung des Fahrzeugs gegenüber einer gedachten horizontalen Ebene) bei der Ermittlung der Masse berücksichtigt. Vorteilhaft kann damit bei der Ermittlung der Masse des Gespanns und/oder des Anhängers berücksichtigt werden, ob beispielsweise das Fahrzeug an einem Hang steht und die Anfahrt an einem Fahrbahnabschnitt mit bergaufgerichteter und/oder bergab-gerichteter Steigung erfolgt. Bevorzugt wird bei der Ermittlung der Masse und/oder bei der Ermittlung des Anfahrmoments wenigstens ein Beschleunigungswert des Fahrzeugs berücksichtigt.

Bevorzugt wird bei der Ermittlung der zu erwartenden Reichweite wenigstens ein Antriebsleistungswert und/oder ein Rekuperationsleistungswert und/oder ein (momentaner und/oder durchschnittlicher) Verbrauch an Energie pro Streckeneinheit und/oder eine durch Rekuperation zurückgewonnene Energie berücksichtigt.

Bei einem weiter bevorzugten Verfahren erfasst eine Erfassungseinrichtung des Fahrzeugs ein rückwärtiges Umfeld des Fahrzeugs einschließlich Anhänger und auf Grundlage der von der Erfassungseinrichtung erfassten Aufnahme wird die wenigstens eine Ausdehnungsgröße ermittelt. Bevorzugt umfasst die Ermittlungseinrichtung die Erfassungseinrichtung. Hierdurch wird ermöglicht, dass etwa selbst ein bereits im rückwärtigen Umfeld des Fahrzeugs platzierter aber noch nicht angekuppelter Anhänger von der Erfassungseinrichtung vorteilhaft bereits erfassbar sein kann.

Bevorzugt ist die Erfassungseinrichtung des Fahrzeugs zur Erfassung einer örtlich aufgelösten Aufnahme geeignet und bestimmt. Durch die örtlich aufgelöste Aufnahme ist es vorteilhaft möglich, ein Ausmaß des Anhängers wie eine Breite und/oder Höhe, festzustellen. Bevorzugt handelt es sich bei der Erfassungseinrichtung um eine optische (visuelle) Erfassungseinrichtung, bevorzugt um eine Bilderfassungseinrichtung und besonders bevorzugt um eine Kamera, welche insbesondere im sichtbaren Bereich operiert.

Bevorzugt handelt es sich bei der Erfassungseinrichtung um eine Rückfahrkamera zur Beobachtung und/oder Aufnahme von Bildern des rückwärtigen Umfelds einschließlich des Anhängers. Bevorzugt ist die (Bild-)Erfassungseinrichtung derart angeordnet, dass sie den anzukoppelnden und/oder gekoppelten Anhänger wenigstens teilweise und bevorzugt in seiner Gesamtheit erfasst. Bevorzugt ist die (Bild-)Erfassungseinrichtung Teil eines Anhängerrangierassistenten.

Bei einem weiter bevorzugten Verfahren umfasst die Erfassungseinrichtung des Fahrzeugs eine (insbesondere obig genannte) Bilderfassungseinrichtung (insbesondere eine Kamera und insbesondere eine CCD-Farbkamera) und/oder einen Radarscanner und/oder einen Laserscanner, wobei der Radarscanner und/oder Laserscanner eine räumliche Struktur eines rückwärtigen Umgebungsbereichs des Fahrzeugs, insbesondere eine räumliche Struktur des Anhängers, erfasst. Bevorzugt wird auf Grundlage der von der Erfassungseinrichtung, insbesondere der Bilderfassungseinrichtung (insbesondere der Kamera), und/oder des Radarscanners und/oder des Laserscanners, erfassten Aufnahme (insbesondere auf Grundlage einer Vielzahl hiervon erfasster Aufnahmen) und/oder der (durch den Radarscanner und/oder den Laserscanner) erfassten räumlichen Struktur die wenigstens eine Ausdehnungsgröße ermittelt.

Die Verwendung eines Radarscanners und/oder Laserscanners bietet den Vorteil, dass eine sehr präzise Ermittlung der räumlichen Struktur, insbesondere des Anhängers, und damit eine sehr präzise Ermittlung einer geometrischen Ausdehnung möglich ist. Insbesondere können vornehmlich mit Radar oder Kamera sowohl Breite des Anhängers, als auch die Höhe bestimmt werden. Durch die Verwendung einer Kombination von Kamera mit wenigstens einer weiteren Sensoreinrichtung oder mehrerer weiterer Sensoreinrichtungen (Radarscanner und/oder Laserscanner) kann die Präzision der Ermittlung der geometrischen Ausdehnung nochmals erhöht werden.

Bevorzugt wird wenigstens eine ermittelte Kenngröße, insbesondere die wenigstens eine Ausdehnungsgröße, des Anhängers in einer Speichereinrichtung der Reichweitenermittlungsvorrichtung und/oder des Fahrzeugs abgelegt. Bevorzugt ist die ermittelte Kenngröße in einem späteren, weiteren Anhängerbetrieb des Fahrzeugs mit diesem Anhänger wieder abrufbar. Bevorzugt ist die Kenngröße charakteristisch für einen Strömungswiderstandskoeffizient (insbesondere Luftwiderstandskoeffizient) des Anhängers und/oder wenigstens eine und bevorzugt mehrerer Ausdehnungsgröße und/oder wenigstens eine Masse des Anhängers und/oder wenigstens einen Energieverbrauch.

Bevorzugt werden die bisher mit dem Fahrzeug gezogenen Anhänger gespeichert und können insbesondere vom Fahrer abgerufen werden. Wird immer derselbe Anhänger (z.B. Wohnwagen) gezogen, können so schon vor Fahrtantritt die optimale Route inklusive der Ladestopps berechnet werden.

Bevorzugt werden in einer Speichereinrichtung des Fahrzeugs und/oder der Reichweitenermittlungsvorrichtung für eine geometrische Ausdehnung des Anhängers und/oder einen Verbrauch, insbesondere einen Langzeitverbrauch, des Anhängers charakteristische Daten abgelegt.

In einem weiter bevorzugten Verfahren wird der Reichweitenwert (insbesondere zusätzlich) unter Berücksichtigung von in einer und/oder der (obig genannten) Speichereinrichtung (bevorzugt des Fahrzeugs) abgelegten, dem Anhänger zugeordneter Daten aus vorangegangenen Fahrten ermittelt.

Bevorzugt werden für wenigstens einen bereits an das Fahrzeug angekoppelten und besonders bevorzugt für jeden bekannten (bzw. bei dem Fahrzeug angekoppelten) Anhänger die Daten und auch ein Langzeitverbrauch aus den letzten Fahrten gespeichert. Auf diese Weise verbessert sich die Berechnung je mehr Daten vorliegen. Die Unterschiede in der Fahrweise im Anhängerbetrieb hat üblicherweise eine geringere Varianz als im Solobetrieb. Die Fahrweise ist konstanter.

In einem weiter bevorzugten Verfahren sind in einer Speichereinrichtung des Fahrzeugs und/oder in der (obig genannten) Speichereinrichtung für eine Vielzahl verschiedener Anhänger für deren Kontur und/oder Struktur charakteristische Daten abgelegt und/oder ablegbar und eine mit der Erfassungseinrichtung erfasste Aufnahme wird mit der Vielzahl charakteristischer Daten abgeglichen. Dies bietet den Vorteil, dass ein der Speichereinrichtung bekannter Anhänger schneller erkennbar ist und etwa vor Fahrtantritt Daten wie etwa ein (Leer-)Gewicht und/oder eine Länge und/oder ein Strömungswiderstandskoeffizient bereits ermittelbar und insbesondere abrufbar sind.

Bevorzugt kann mittels einer Bildaufnahme (der Erfassungseinrichtung) und/oder mittels Abgleich der erfassten Aufnahme mit der in der Speichereinrichtung abgelegten Daten ein Anhänger, insbesondere eine Anhängerart und/oder ein baugleicher Anhänger und/oder ein Anhängerhersteller, identifiziert und/oder klassifiziert werden. Bevorzugt erfolgt dabei ein Abgleich einer erfassten Kontur des Anhängers mit einer Datenbank

Bevorzugt erfolgt eine (optische) Identifizierung eines vorgegebenen Anhängers und/oder eines baugleichen Anhängers mittels charakteristischer Merkmale des Anhängers. Beispielsweise kann, insbesondere als charakteristisches Merkmal des Anhängers, ein Aufkleber auf der Außenoberfläche des Anhängers (welche insbesondere von der Erfassungseinrichtung erfassbar ist) und/oder ein Logo und/oder eine Farbe und/oder ein optischer Code (etwa ein QR-Code und/oder ein Barcode und/oder ein zweidimensionaler Code, welcher auf dem Anhänger angeordnet ist) und/oder eine Herstellerangabe zur Identifizierung des Anhängers (mittels der optischen Erfassungseinrichtung) dienen.

Zusätzlich oder alternativ kann es sich bei dem (optischen) charakteristischen Merkmal des Anhängers auch um wenigstens eine Kontur, einen Griff, einen Achsabstand, ein an dem Anhänger angeordnetes Objekt, eine Art, Form und/oder eine Anzahl an Reflektoren, und/oder eine bereichsweise (insbesondere farbliche) Abweichung von den umgebenden Oberflächenbereichen (etwa eine Schadstelle) des Anhängers handeln. Zusätzlich oder alternativ kann das charakteristische Merkmal eine Information über eine (relative und/oder absolute) Position und/oder geometrische Ausdehnung des zur Identifikation verwendeten Elements umfassen.

Bevorzugt ist die Reichweitenermittlungsvorrichtung und/oder eine Auswerteeinrichtung (insbesondere der Reichweitenermittlungsvorrichtung) in der Lage, über moderne Algorithmen (Kl, d. h. Künstliche Intelligenz, machine learning (maschinelles Lernen), deep learning etc.), bevorzugt mittels Auswertung von mit der, insbesondere optischen, (Bild- )Erfassungseinrichtung aufgenommenen (Bild-)Daten auf wenigstens ein charakteristisches Merkmal des Anhängers hin einen Anhänger zu identifizieren. Bevorzugt kann die Reichweitenermittlungsvorrichtung und/oder die Auswerteeinrichtung eine Vielzahl charakteristischer Merkmale zur Identifizierung eines Anhängers verwenden.

Dabei kann die Auswahl der zur Identifizierung eines Anhängers verwendeten charakteristischen Merkmale, etwa von einem Nutzer, vorgegeben sein. Bevorzugt ist die Reichweitenermittlungsvorrichtung und/oder die Auswerteeinrichtung und insbesondere der verwendete Algorithmus in der Lage, (etwa durch Abgleich mit in der Speichereinrichtung abgelegter Daten von Anhängern) wenigstens ein charakteristisches Merkmal selbst festzulegen. Bevorzugt werden im Anschluss weitere (insbesondere alle) angekoppelten Anhänger auf Vorliegen dieses (gelernten) charakteristischen Merkmals hin überprüft.

Bevorzugt kann ein Einlernen des Algorithmus, insbesondere ein Festlegen (gelernter) charakteristischer Merkmale, basierend auf vorgegebenen und/oder in der Speichereinrichtung (bzw. der Datenbank) abgelegten Datensätzen von (insbesondere bereits an diesem Fahrzeug und/oder einem weiteren bzw. vorherigen Fahrzeug des Nutzers angekoppelten) Anhängern durchgeführt werden.

Bevorzugt ist die Reichweitenermittlungsvorrichtung und/oder eine Auswerteeinrichtung (insbesondere der Reichweitenermittlungsvorrichtung) in der Lage, über moderne Algorithmen (KI, d. h. Künstliche Intelligenz, machine learning (maschinelles Lernen), deep learning etc.), bevorzugt mittels Auswertung einer Vielzahl von Daten, insbesondere wenigstens eines Bildes und/oder eines Anfahrmomentes und/oder abgerufener Leistungsdaten und/oder eines Energieverbrauchs, einen Anhänger zu identifizieren und/oder zu klassifizieren und/oder einen Energieverbrauch des Anhängers und/oder des Gespanns zu ermitteln.

Bei der Speichereinrichtung kann es sich (jeweils bei allen obig genannten Speichereinrichtungen) um eine fahrzeuginterne Speichereinrichtung handeln. Denkbar ist aber auch, dass es sich um eine außerhalb des Fahrzeugs angeordnete Speichereinrichtung handelt. Beispielsweise könnte es sich um ein Backend-Server eines OEMs ("Original Equipment Manufacturer", insbesondere eines Fahrzeugherstellers und/oder Anhängerherstellers) handeln. Bevorzugt handelt es sich um eine Cloud-basierte Speichereinrichtung. Bevorzugt ist die Reichweitenermittlungsvorrichtung dazu geeignet und bestimmt sowie dazu konfiguriert, auf die Speichereinrichtung zuzugreifen. Bevorzugt ist auf der Speichereinrichtung eine Datenbank angelegt, in welcher für einen vorgegebenen Anhänger wenigstens eine Ausdehnungsgröße und/oder für einen Strömungswiderstandskoeffizient des Anhängers charakteristische Daten und/oder für eine Kontur des Anhängers und/oder für einen Langzeitverbrauch charakteristische Daten abgelegt sind. Bevorzugt sind diese Daten benutzerspezifisch (also jeweils für einen vorgegebenen Nutzer) und/oder benutzerunabhängig (etwa gemittelt über mehrere Nutzer und/oder von einem Hersteller oder Diensteanbieter vorgegeben) abgelegt.

In einem weiter bevorzugten Verfahren ist über eine Kommunikationseinrichtung des Fahrzeugs von einem Fahrer wenigstens ein Anhängerparameter eingebbar und/oder auswählbar, welcher charakteristisch ist für eine Eigenschaft des Anhängers. Dies bietet den Vorteil, dass ermittelte Parameter und/oder Ausdehnungsgrößen des Anhängers von einem Nutzer (etwa um ein Gewicht) ergänzt und/oder bestätigt und/oder präzisiert werden können.

Dabei ist möglich, dass die Kommunikationseinrichtung als manuelle Lösung (insbesondere als Ermittlungseinrichtung), insbesondere ohne Sensorik, alternativ oder zusätzlich zu einer Erfassungseinrichtung vorgesehen sein kann.

Dem Nutzer, insbesondere dem Fahrer, wird bevorzugt die Möglichkeit gegeben, aus einer Auswahl von Anhängern zu wählen und diese in die Berechnung einzubeziehen. Die Auswahl an Anhängern kann entweder aus einer Datenbank mit festgelegten Anhängertypen gewählt werden oder auch vom Fahrer manuell eingegeben werden. Die Auswahl von Anhängern kann dabei durch eine Bildausgabeeinrichtung, etwa ein Display, visualisiert werden. Dies ermöglicht eine schnellere Auswahl des Nutzers.

Bevorzugt kann ein Nutzer, insbesondere ein Fahrer, durch (manuelle) Eingabe eine bestimmte (insbesondere vorgeschlagene und/oder ermittelte) geometrische Ausdehnung (Länge und/oder Breite und/oder Höhe) des Anhängers und/oder eine Masse des Anhängers bestätigen und/oder korrigieren.

Bevorzugt wird anhand der (ermittelten und/oder erfassten und/oder eingegebenen) Anhängerdaten, bevorzugt Ausmaße und/oder Gewicht und/oder Achsanzahl, ein Verbrauch geschätzt (bevorzugt durch die Reichweitenermittlungsvorrichtung), der dann in die Berechnung einfließt.

In einem weiter bevorzugten Verfahren übermittelt eine Übermittlungseinrichtung des Anhängers wenigstens einen Anhängerparameter, welcher charakteristisch ist für eine Eigenschaft des Anhängers (etwa eine geometrische Ausdehnung und/oder eine Masse und/oder ein Leergewicht und/oder ein Strömungskoeffizient und/oder ein Maß für einen Energieverbrauch), an das Fahrzeug. Bei der Übermittlungseinrichtung kann es sich um eine drahtlose und/oder eine drahtgebundene Übermittlungseinrichtung handeln.

Bevorzugt weist der Anhänger eine Speichereinrichtung auf, in welcher wenigstens ein Anhängerparameter abgelegt ist. Bevorzugt kann wenigstens ein auf der Speichereinrichtung des Anhängers abgelegter Anhängerparameter, insbesondere ausgelöst durch ein (insbesondere elektronisches) Anfragesignal, welches von dem Fahrzeug und/oder der Reichweitenermittlungsvorrichtung übermittelt wurde, abgerufen und an das Fahrzeug und/oder die Reichweitenermittlungsvorrichtung übermittelt werden.

Bevorzugt handelt es sich bei der Übermittlungseinrichtung um eine (insbesondere drahtlose) Sendeeinrichtung. Bevorzugt weist das Fahrzeug eine zu der Sendeeinrichtung korrespondierende Empfangseinrichtung auf. Dabei kann es sich um eine aktive oder eine passive Sendeeinrichtung, welche keine eigene elektrische Energieversorgung aufweist, handeln. So kann es sich beispielsweise um ein RFID-Tag handeln.

Bevorzugt ist der Anhänger mittels des wenigstens einen Anhängerparameters (insbesondere eindeutig) identifizierbar. Bevorzugt kann der Anhängerparameter eindeutig diesem Anhänger (und umgekehrt) zugeordnet werden.

Bevorzugt ist über die Übermittlungseinrichtung eine elektrische Erkennung des Anhängers (etwa durch Austausch und/oder Übermittlung elektrischer Signale zwischen dem Anhänger und dem Fahrzeug) und/oder eine drahtlose Erkennung des Anhängers (etwa über Funk) möglich.

Die vorliegende Erfindung ist weiterhin gerichtet auf eine Reichweitenermittlungsvorrichtung für ein Fahrzeug zur Ermittlung einer zu erwartenden Reichweite des Fahrzeugs im Anhängerbetrieb. Dabei weist das Fahrzeug eine Anhängerkupplung zur Kopplung mit einem Anhänger zu einem Gespann auf.

Erfindungsgemäß ist eine Ermittlungseinrichtung vorgesehen, welche dazu geeignet und bestimmt ist, wenigstens eine Ausdehnungsgröße für einen an das Fahrzeug gekoppelten und/oder zu koppelnden Anhänger zu ermitteln, wobei die Ausdehnungsgröße charakteristisch ist für eine geometrische Ausdehnung des Anhängers in wenigstens eine Richtung. Bevorzugt weist die Reichweitenermittlungsvorrichtung die Ermittlungseinrichtung (etwa als Bestandteil) auf. Denkbar ist aber auch, dass es sich bei der Ermittlungseinrichtung um ein von der Reichweitenermittlungsvorrichtung und/oder dem Fahrzeug externes Gerät handelt, welches dazu geeignet und bestimmt ist, wenigstens eine ermittelte Ausdehnungsgröße an die Reichweitenermittlungsvorrichtung zu übermitteln.

Dabei ist die Reichweitenermittlungsvorrichtung dazu geeignet und bestimmt, einen Reichweitenwert, welcher für die zu erwartende Reichweite des Gespanns aus dem Fahrzeug und dem Anhänger charakteristisch ist, auf Grundlage der wenigstens einen Ausdehnungsgröße zu ermitteln.

Dabei ist die Reichweitenermittlungsvorrichtung dazu geeignet und bestimmt, alle obig im Rahmen des Verfahrens offenbarten Verfahrensschritte in Bezug auf die Reichweitenermittlungsvorrichtung einzeln oder in Kombination miteinander auszuführen.

Es wird also auch im Rahmen des erfindungsgemäßen vorgeschlagen, dass über die Bestimmung der Ausmaße des Anhängers, vornehmlich mit Radar oder Kamera, etwa die Breite oder die Höhe, eine Reichweitenberechnung vorgenommen wird.

Bevorzugt ist die Reichweitenermittlungsvorrichtung dazu geeignet und bestimmt, aus einem Anfahrmoment des Gespanns aus dem Fahrzeug und dem Anhänger eine Masse des Anhängers zu ermitteln. Bevorzugt ist die Reichweitenermittlungsvorrichtung dazu geeignet und bestimmt, die zu erwartende Reichweite auf Grundlage der ermittelten (und/oder der eingegebenen) Masse des Anhängers zu ermitteln.

Die vorliegende Erfindung ist weiterhin gerichtet auf ein Fahrzeug, insbesondere Kraftfahrzeug, umfassend eine Reichweitenermittlungsvorrichtung gemäß einer obig beschriebenen Ausführungsform.

Die Reichweitenermittlungsvorrichtung kann dabei in ihrer Gesamtheit oder wenigstens teilweise fahrzeugintern angeordnet sein und bevorzugt fest mit dem Fahrzeug verbaut sein. Die Reichweitenermittlungsvorrichtung weist bevorzugt einen Prozessor auf. Denkbar ist aber auch, dass beispielsweise der Prozessor oder eine Recheneinrichtung (wenigstens teilweise) extern außerhalb des Fahrzeugs angeordnet ist. So könnte die Reichweitenermittlungsvorrichtung mittels eines (außerhalb des Fahrzeugs angeordneten) Cloud-basierten Servers die zu erwartende Reichweite ermitteln.

Bei dem Fahrzeug kann es sich um ein Fahrzeug, insbesondere einen Personenkraftwagen handeln, welches bzw. welcher als Elektrofahrzeug ausgebildet ist. Die Batterie kann ein Hochvoltspeicher, beispielsweise in Form einer auf Lithium-Ionen basierenden Traktionsbatterie sein. Bei der Batterie handelt es sich insbesondere um einen Energiespeicher zum Speichern elektrischer Energie.

Bevorzugt ist die Reichweitenermittlungsvorrichtung dazu geeignet und bestimmt, einen aktuellen Ladezustand und/oder einen Entladungsgrad der, insbesondere als Traktionsbatterie ausgebildeten, Batterie zu überwachen und/oder abzurufen. Bevorzugt wird bei der Ermittlung der zu erwartenden Reichweite der (aktuelle) Ladezustand und/oder Entladungsgrad der Batterie berücksichtigt.

Bei dem Fahrzeug kann es sich insbesondere um ein (motorisiertes) Straßenfahrzeug handeln. Bei einem Fahrzeug kann es sich um ein Kraftfahrzeug handeln, welches insbesondere ein von dem Fahrer selbst gesteuertes Kraftfahrzeug ("Driver only"), ein halbautonomes, autonomes (beispielsweise der Autonomiestufe Level 3 oder 4 oder 5 (der Norm SAE J3016)) oder selbstfahrendes Kraftfahrzeug ist. Die Autonomiestufe Level 5 bezeichnet dabei vollautomatisch fahrende Fahrzeuge. Ebenso kann es sich bei dem Fahrzeug um ein fahrerloses Transportsystem handeln. Das Fahrzeug kann dabei von einem Fahrer gesteuert werden oder autonom fahren. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Die vorliegende Erfindung ist weiterhin gerichtet auf ein Computerprogramm oder Computerprogrammprodukt, umfassend Programmmittel, insbesondere einen Programmcode, welcher zumindest die (zumindest einige der) Verfahrensschritte des erfindungsgemäßen Verfahrens und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf einen Datenspeicher, auf welchem zumindest eine Ausführungsform des erfindungsgemäßen Computerprogramms oder einer bevorzugten Ausführungsform des Computerprogramms gespeichert ist.

Weitere Vorteile und Ausführungsformen ergeben sich aus der beigefügten Zeichnung:

### Darin zeigt:

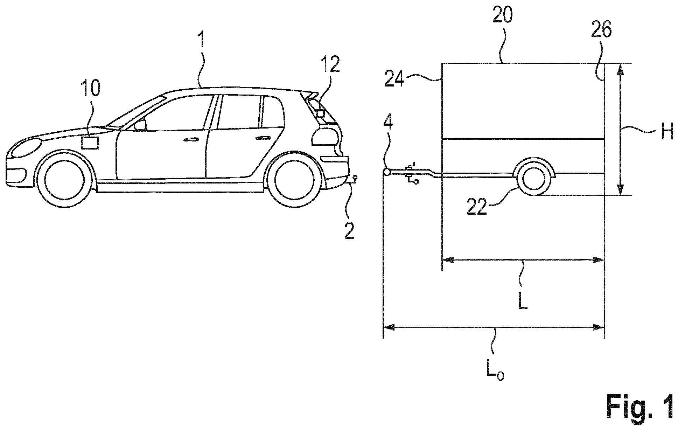

Fig. 1 eine schematische, ausschnittsweise Darstellung eines erfindungsgemäßen Fahrzeugs mit einer erfindungsgemäßen Reichweitenermittlungsvorrichtung sowie einen an das Fahrzeug zu einem Gespann koppelbaren Anhänger gemäß einer Ausführungsform.

Fig. 1 zeigt eine schematische, ausschnittsweise Darstellung eines erfindungsgemäßen Fahrzeugs 1 mit einer erfindungsgemäßen Reichweitenermittlungsvorrichtung 10 sowie einen an das Fahrzeug 1 zu einem Gespann koppelbaren Anhänger 20 gemäß einer Ausführungsform.

Dabei weist das Fahrzeug 1 eine Anhängerkupplung 2 und der Anhänger 20 eine hierzu korrespondierende Anhängerkupplung 4 auf.

Das Fahrzeug 1 und insbesondere die Reichweitenermittlungsvorrichtung 10 weist bevorzugt eine Erfassungseinrichtung 12 auf, bei welcher es sich beispielsweise um eine Rückfahrkamera zur Beobachtung und/oder Aufnahme von Bildern des rückwärtigen Umfelds einschließlich es Anhängers 20 handeln kann.

Das aufgenommene Bild der Erfassungseinrichtung 12 kann auf eine Höhe H des Anhängers 20 und/oder eine Breite des Anhängers 20 (welche in eine Richtung senkrecht zur Figurenebene und senkrecht zur Längsrichtung L und Höhenrichtung H gemessen wird) hin ausgewertet werden.

Insbesondere beispielsweise bei einer Kurvenfahrt, wenn der Anhänger nicht parallel zur Fahrtrichtung des Fahrzeugs ausgerichtet ist, sondern einen Winkel (etwa größer als 5°, bevorzugt größer als 10°) hierzu einschließt, kann eine Seitenansicht des Anhängers 20 von der Erfassungseinrichtung 12 aufgenommen werden. Bevorzugt kann beispielsweise aus dem aufgenommenen Rad 22 (und insbesondere einer Verzerrung des kreisförmigen Rads) auf einen Abstand der vorderen Seitenkante 24 und der hinteren Seitenkante 26 und/oder auf eine Länge L des Anhängers (ohne Deichsel) sowie auch auf eine Länge L₀ (inklusive Deichsel) geschlossen werden.

Aus diesen geometrischen Ausdehnungen kann die Reichweitenermittlungsvorrichtung 10 bevorzugt, insbesondere unter Berücksichtigung der Masse des Anhängers, welche aus einem Anfahrmoment des Gespanns ermittelt werden kann, einen Energieverbrauch und hierdurch eine zu erwartende Reichweite des Gespanns ermitteln.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeug
- 2: Anhängerkupplung
- 4: Anhängerkupplung
- 10: Reichweitenermittlungsvorrichtung
- 12: Erfassungseinrichtung
- 20: Anhänger
- 22: Rad
- 24: Vordere Seitenkante
- 26: Hintere Seitenkante
- H: Höhe des Anhängers
- L: Länge des Anhängers ohne Deichsel
- Lo: Länge des Anhängers mit Deichsel

## Patentansprüche

1. Verfahren zur Ermittlung einer zu erwartenden Reichweite eines Fahrzeugs (1) im Anhängerbetrieb, wobei das Fahrzeug (1) eine Anhängerkupplung (2) zur Kopplung mit einem Anhänger (20) zu einem Gespann aufweist, aufweisend:
- Ermittlung wenigstens einer Ausdehnungsgröße für einen an das Fahrzeug (1) gekoppelten und/oder zu koppelnden Anhänger (20), welche charakteristisch ist für eine geometrische Ausdehnung des Anhängers (H, L) in wenigstens eine Richtung, durch eine Ermittlungseinrichtung (12), wobei eine Erfassungseinrichtung (12) des Fahrzeugs (1) ein rückwärtiges Umfeld des Fahrzeugs (1) einschließlich Anhänger (20) erfasst und auf Grundlage der von der Erfassungseinrichtung (12) erfassten Aufnahme die wenigstens eine Ausdehnungsgröße ermittelt wird, wobei in einer Speichereinrichtung für eine Vielzahl verschiedener Anhänger für deren Kontur und/oder Struktur charakteristische Daten abgelegt sind und/oder ablegbar sind und eine mit der Erfassungseinrichtung erfasste Aufnahme mit der Vielzahl charakteristischer Daten abgeglichen wird;
- Ermittlung eines Reichweitenwerts, welcher für die zu erwartende Reichweite des Gespanns aus dem Fahrzeug (1) und dem Anhänger (20) charakteristisch ist, auf Grundlage der wenigstens einen Ausdehnungsgröße (H, L) durch eine Reichweitenermittlungsvorrichtung (10) des Fahrzeugs (1).

2. Verfahren nach Anspruch 1, **dadurch gekennzeichnet, dass** die Reichweitenermittlungsvorrichtung (10) aus einem Anfahrmoment des Gespanns aus dem Fahrzeug (1) und dem Anhänger (20) eine Masse des Anhängers (20) und/oder des Gespanns ermittelt und der Reichweitenwert unter Berücksichtigung dieser Masse ermittelt wird.

3. Verfahren nach einem der vorangegangenen Ansprüche, **dadurch gekennzeichnet, dass** die Erfassungseinrichtung (12) des Fahrzeugs (1) eine Kamera umfasst und/oder einen Radarscanner und/oder einen Laserscanner umfasst, wobei der Radarscanner und/oder Laserscanner eine räumliche Struktur eines rückwärtigen Umgebungsbereichs des Fahrzeugs (1), insbesondere eine räumliche Struktur des Anhängers (20), erfasst, und auf Grundlage der von der Erfassungseinrichtung (12) erfassten Aufnahme die wenigstens eine Ausdehnungsgröße ermittelt wird.

4. Verfahren nach dem vorangegangenen Anspruch, **dadurch gekennzeichnet, dass** der Reichweitenwert unter Berücksichtigung von in der Speichereinrichtung des Fahrzeugs abgelegten, dem Anhänger zugeordneter Daten aus vorangegangenen Fahrten ermittelt wird.

5. Verfahren nach einem der vorangegangenen Ansprüche, **dadurch gekennzeichnet, dass** über eine Kommunikationseinrichtung des Fahrzeugs von einem Fahrer wenigstens ein Anhängerparameter eingebbar und/oder auswählbar sind, welcher für eine Eigenschaft des Anhängers charakteristisch ist.

6. Verfahren nach einem der vorangegangenen Ansprüche, **dadurch gekennzeichnet, dass** eine Übermittlungseinrichtung des Anhängers (20) wenigstens einen Anhängerparameter, welcher für eine Eigenschaft des Anhängers charakteristisch ist, an das Fahrzeug (1) übermittelt.

7. Reichweitenermittlungsvorrichtung (10) für ein Fahrzeug (1) zur Ermittlung einer zu erwartenden Reichweite des Fahrzeugs (1) im Anhängerbetrieb, wobei das Fahrzeug (1) eine Anhängerkupplung (2) zur Kopplung mit einem Anhänger (20) zu einem Gespann aufweist, **dadurch gekennzeichnet, dass** eine Ermittlungseinrichtung (12) vorgesehen ist, welche dazu geeignet und bestimmt ist, wenigstens eine Ausdehnungsgröße für einen an das Fahrzeug (1) gekoppelten und/oder zu koppelnden Anhänger (20) zu ermitteln, welche charakteristisch ist für eine geometrische Ausdehnung (H, L) des Anhängers (20) in wenigstens eine Richtung, wobei eine Erfassungseinrichtung (12) des Fahrzeugs (1) dazu geeignet und bestimmt ist, ein rückwärtiges Umfeld des Fahrzeugs (1) einschließlich Anhänger (20) zu erfassen und auf Grundlage der von der Erfassungseinrichtung (12) erfassten Aufnahme die wenigstens eine Ausdehnungsgröße zu ermitteln, wobei in einer Speichereinrichtung für eine Vielzahl verschiedener Anhänger für deren Kontur und/oder Struktur charakteristische Daten abgelegt sind und/oder ablegbar sind und eine mit der Erfassungseinrichtung erfasste Aufnahme mit der Vielzahl charakteristischer Daten abgeglichen wird, wobei die Reichweitenermittlungsvorrichtung (10) dazu geeignet und bestimmt ist, einen Reichweitenwert, welcher für die zu erwartende Reichweite des Gespanns aus dem Fahrzeug (1) und dem Anhänger (20) charakteristisch ist, auf Grundlage der wenigstens einen Ausdehnungsgröße (H, L) zu ermitteln.

8. Fahrzeug (1), insbesondere Kraftfahrzeug, umfassend eine Reichweitenermittlungsvorrichtung (10) gemäß dem vorhergehenden Anspruch.

## Claims

1. Method for determining an expected range of a vehicle (1) in trailer mode, wherein the vehicle (1) has a trailer hitch (2) for hitching to a trailer (20) to form a vehicle/trailer combination, comprising:
- determining at least one extent variable for a trailer (20) that is hitched and/or to be hitched to the vehicle (1), said extent variable being characteristic of a geometric extent (H, L) of the trailer in at least one direction, by way of a determination device (12), wherein a recording device (12) of the vehicle (1) records a rear environment of the vehicle (1), including the trailer (20), and takes the photograph recorded by the recording device (12) as a basis for determining the at least one extent variable, wherein a storage device stores and/or can store data for a multiplicity of different trailers that are characteristic of the contour and/or structure of said trailers, and a photograph recorded using the recording device is compared against the multiplicity of characteristic data;
- determining a range value that is characteristic of the expected range of the vehicle/trailer combination formed by the vehicle (1) and the trailer (20) on the basis of the at least one extent variable (H, L) by way of a range determination apparatus (10) of the vehicle (1).

2. Method according to Claim 1, **characterized in that** the range determination apparatus (10) determines a mass of the trailer (20) and/or of the vehicle/trailer combination from a starting torque of the vehicle/trailer combination formed by the vehicle (1) and the trailer (20), and the range value is determined by taking account of this mass.

3. Method according to either of the preceding claims, **characterized in that** the recording device (12) of the vehicle (1) comprises a camera and/or comprises a radar scanner and/or a laser scanner, wherein the radar scanner and/or laser scanner records a spatial structure of a rear area of the surroundings of the vehicle (1), in particular a spatial structure of the trailer (20), and the photograph recorded by the recording device (12) is taken as a basis for determining the at least one extent variable.

4. Method according to the preceding claim, **characterized in that** the range value is determined by taking account of data from previous journeys that are stored in the storage device of the vehicle and associated with the trailer.

5. Method according to one of the preceding claims, **characterized in that** a communication device of the vehicle can be used by a driver to input and/or select at least one trailer parameter that is characteristic of a property of the trailer.

6. Method according to one of the preceding claims, **characterized in that** a transmission device of the trailer (20) transmits at least one trailer parameter that is characteristic of a property of the trailer to the vehicle (1).

7. Range determination apparatus (10) for a vehicle (1) for determining an expected range of the vehicle (1) in trailer mode, wherein the vehicle (1) has a trailer hitch (2) for hitching to a trailer (20) to form a vehicle/trailer combination, **characterized in that** there is provision for a determination device (12) that is suitable and intended for determining at least one extent variable for a trailer (20) that is hitched and/or to be hitched to the vehicle (1), said extent variable being characteristic of a geometric extent (H, L) of the trailer (20) in at least one direction, wherein a recording device (12) of the vehicle (1) is suitable and intended for recording a rear environment of the vehicle (1), including the trailer (20), and taking the photograph recorded by the recording device (12) as a basis for determining the at least one extent variable, wherein a storage device stores and/or can store data for a multiplicity of different trailers that are characteristic of the contour and/or structure of said trailers, and a photograph recorded using the recording device is compared against the multiplicity of characteristic data, wherein the range determination apparatus (10) is suitable and intended for determining a range value that is characteristic of the expected range of the vehicle/trailer combination formed by the vehicle (1) and the trailer (20) on the basis of the at least one extent variable (H, L).

8. Vehicle (1), in particular motor vehicle, comprising a range determination apparatus (10) according to the preceding claim.

## Revendications

1. Procédé de détermination de l'autonomie attendue d'un véhicule (1) en mode remorquage, le véhicule (1) comportant un attelage de remorque (2) destiné à être attelé à une remorque (20) pour former un tandem, ledit procédé comportant les étapes suivantes :
- déterminer au moins une grandeur d'expansion d'une remorque (20), qui est attelée et/ou doit être attelée au véhicule (1) et qui est caractéristique d'une expansion géométrique de la remorque (H, L) dans au moins une direction, par le biais d'un module de détermination (12), un module de détection (12) du véhicule (1) détectant un environnement arrière du véhicule (1), incluant la remorque (20), et l'au moins une grandeur d'expansion étant déterminée sur la base de la capture effectuée par le module de détection (12), un module de mémorisation d'un grand nombre de remorques différentes mémorisant et/ou pouvant mémoriser des données caractéristiques du contour et/ou de la structure desdites remorques et une capture effectuée par le module de détection étant comparée au grand nombre de données caractéristiques ;
- déterminer une valeur d'autonomie, qui est caractéristique de l'autonomie attendue du tandem formé par le véhicule (1) et la remorque (20), sur la base de l'au moins une grandeur d'expansion (H, L) par le biais d'un dispositif de détermination d'autonomie (10) du véhicule (1).

2. Procédé selon la revendication 1, **caractérisé en ce que** le dispositif de détermination d'autonomie (10) détermine une masse de la remorque (20) et/ou du tandem à partir d'un instant de départ du tandem formé par le véhicule (1) et la remorque (20) et la valeur d'autonomie est déterminée avec prise en compte de cette masse.

3. Procédé selon l'une des revendications précédentes, **caractérisé en ce que** le module de détection (12) du véhicule (1) comprend une caméra et/ou comprend un scanner radar et/ou un scanner laser, le scanner radar et/ou le scanner laser détectant une structure spatiale d'une zone d'environnement arrière du véhicule (1), en particulier une structure spatiale de la remorque (20), et l'au moins une grandeur d'expansion est déterminée sur la base de la capture effectuée par le module de détection (12).

4. Procédé selon la revendication précédente, **caractérisé en ce que** la valeur d'autonomie est déterminée avec prise en compte de données de trajets précédents mémorisées dans le module de mémorisation du véhicule et associées à la remorque.

5. Procédé selon l'une des revendications précédentes, **caractérisé en ce qu'**au moins un paramètre de remorque, caractéristique d'une propriété de la remorque, peut être saisi et/ou sélectionné par un conducteur par le biais d'un module de communication du véhicule.

6. Procédé selon l'une des revendications précédentes, **caractérisé en ce qu'**un module de transmission de la remorque (20) transmet au véhicule (1) au moins un paramètre de remorque, caractéristique d'une propriété de la remorque.

7. Dispositif de détermination d'autonomie (10) destiné à un véhicule (1) pour déterminer une autonomie attendue du véhicule (1) en mode remorquage, le véhicule (1) comportant un attelage de remorque (2) destiné à être attelé à une remorque (20) pour former un tandem, **caractérisé en ce qu'**un module de détermination (12) est prévu qui est approprié et défini pour déterminer au moins une grandeur d'expansion d'une remorque (20) attelée et/ou devant être attelée au véhicule (1) et/ou qui est caractéristique d'une expansion géométrique (H, L) de la remorque (20) dans au moins une direction, un module de détection (12) du véhicule (1) étant approprié et défini pour détecter un environnement arrière du véhicule (1), incluant la remorque (20), et déterminer l'au moins une grandeur d'expansion sur la base de la capture effectuée par le module de détection (12), un module de mémorisation d'un grand nombre de remorques différentes mémorisant et/ou pouvant mémoriser des données caractéristiques du contour et/ou de la structure desdites remorques, et une capture effectuée avec le module de détection étant comparée au grand nombre de données caractéristiques, le dispositif de détermination d'autonomie (10) étant approprié et défini pour déterminer une valeur d'autonomie, qui est caractéristique de l'autonomie attendue du tandem formé par le véhicule (1) et la remorque (20), sur la base de l'au moins une grandeur d'expansion (H, L).

8. Véhicule (1), notamment véhicule automobile, comprenant un dispositif de détermination d'autonomie (10) selon la revendication précédente.
